Europäisches Patentamt

European Patent Office

Office européen des brevets

(11) Publication number: **0 455 105 B1**

# EUROPEAN PATENT SPECIFICATION

(45) Date of publication of patent specification: **07.12.94** (51) Int. Cl.⁵: **C08F 240/00**, C09J 157/02

(21) Application number: **91106522.5**

(22) Date of filing: **23.04.91**

(54) **Light colored, aromatic-modified piperylene resins.**

(30) Priority: **24.04.90 US 513654**

(43) Date of publication of application:
**06.11.91 Bulletin  91/45**

(45) Publication of the grant of the patent:
**07.12.94 Bulletin  94/49**

(84) Designated Contracting States:
**BE DE ES FR GB IT NL**

(56) References cited:
**EP-A- 0 175 593**
**EP-A- 0 196 844**
**FR-A- 1 363 841**
**US-A- 3 963 653**

**CHEMICAL ABSTRACTS, vol. 86, no. 12, 21
March 1977, Columbus, Ohio,US; abstract no.
74595V, page 106 ;column 2 ; &JP-A-76 119
091**

(73) Proprietor: **HERCULES INCORPORATED
Hercules Plaza
Wilmington Delaware 19894-0001 (US)**

(72) Inventor: **Chu, Sung Gun
8 Liveoak Court
Hockessin, Delaware 19707 (US)**
Inventor: **Daughenbaugh, Norman Edward, Jr.
68 & Highland Avenue
Turtle Creek, Pennsylvania 15145 (US)**
Inventor: **Rosner, Mark Jay
705R Michigan Avenue
Jeanette, Pennsylvania 15644 (US)**

(74) Representative: **Lederer, Franz, Dr. et al
Lederer, Keller & Riederer
Patentanwälte
Prinzregentenstrasse 16
D-80538 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

This invention relates to tackifier resin compositions for use in adhesives and to methods for their preparation.

Tackifier resins can be used for making thermoplastic adhesives such as hot melts and pressure sensitive adhesives. The adhesives are made of elastomers, block copolymers, ethylene-vinyl acetate (EVA), or amorphous polyolefins along with low molecular weight oligomer tackifiers. A common tackifier is made of aliphatic petroleum hydrocarbon feed-stocks from ethylene crackers in the oil refinery, using cationic polymerization.

$C_5$ resins are commonly made from piperylene concentrates using $AlCl_3$ catalyst at 30 to 50°C. These resins have a softening point from 60 to 120°C with a Gardner color of 4 to 6. There is a need for light color resins, since the dark color and poor heat stability of the $C_5$ resins limit their use. Therefore, the hydrogenated products from aromatic petroleum resins or styrene-modified terpene resins are commonly employed for light colored adhesives.

U.S. Patent No. 4,046,838 discloses a mixture of (i) an unvulcanized elastomeric block copolymer having the structure A-B-A where A is a nonelastomeric styrene block polymer and B is an elastomeric diene block polymer of 1,3-butadiene and (ii) a tackifying resin derived from piperylene, 2-methyl-2 butene, dicyclopentadiene, and α-methylstyrene. The tackifying resin has a Gardner color of 4 to 10 and is prepared by polymerizing the monomers in the presence of an $AlCl_3$ or ethylaluminum dichloride catalyst.

Thermoplastic adhesives can be prepared from elastomers such as block copolymers, oil and tackifiers. These adhesives can be prepared using solvent or hot melt techniques. Depending on the room temperature tackiness, thermoplastic adhesives can be divided into pressure sensitive adhesives (PSA) and hot melt adhesives. PSA are tacky at room temperature with applications as tape and label adhesives. Hot melt adhesives are not tacky at room temperature and have applications as bookbinding and box closing adhesives.

Hot melt adhesives used for bonding in a particular use or application may be completely unsuitable for other uses or applications. Depending upon the type of construction employed, the adhesive must possess certain physical properties. Perhaps the most stringent properties are those required for adhesives to be used in the bonding of polyethylene films to tissue or non-woven substrates in the production of disposable articles, such as diapers, sanitary napkins and bed pads. Using multi-line construction presents unique problems for the adhesive formulator. The adhesive should possess a high degree of tackiness, since it is applied in the form of very fine parallel longitudinal stripes, thus requiring each line of adhesive to possess exceptionally high bonding properties. The adhesive should also possess sufficient adhesive and cohesive strength to provide high bond strength values when subjected to stress so the contructions cannot be easily separated. As an additional criteria, it is necessary that the adhesive, upon application, not be absorbed throughout the actual disposable construction and that the adhesive bonds not only remain secure but also be flexible even after prolonged periods of storage. In addition to requiring heat and oxidation resistance on aging, they should also possess sufficient bonding range and should be white or clear in color.

Recently, hot melt pressure sensitive technology has been developed for non-woven adhesive applications, specifically for diaper adhesives. The requirements for the adhesives are stringent in that they should have good adhesion onto polyethylene and non-woven substrates. In addition, hot melt pressure sensitive adhesives are currently being applied by spray techniques at 275 to 350°F (135 to 177°C), requiring good rheological properties at the melt stage.

Prior to the present invention, adhesive compositions using piperylene resins as a tackifier normally had dark color and poor color and viscosity stability upon heat aging. The adhesive compositions also had unbalanced adhesive and cohesive strengths for hot melt applications. Hence, these adhesive compositions had a limited use on a commercial basis.

According to the invention there is provided a tackifier resin prepared from piperylene and an aromatic hydrocarbon, characterized in that it is water white in color, has a Gardner number of less than one with excellent color stability under heat, a softening point of 60 to 120°C, a weight average molecular weight (Mw) of 2,000 to 8,000, a Z average molecular weight (Mz) of 3,000 to 12,000, and a molecular weight distribution (Mw/Mn) of 1 to 5. The resin is prepared from a monomer mixture consisting essentially of (a) 70 to 10% by weight of a piperylene concentrate having a boiling point of 30 to 50°C produced from cracking of a petroleum oil fraction in a gasoline manufacturing process and having a 2-methyl-2-butene content of less than 15% by weight, and a dicyclopentadiene content of less than 5% by weight, and (b) 30 to 90% by weight of a vinyl aromatic monomer.

Also according to the invention, a method for preparing the tackifier resin is characterized by polymerizing at a temperature of -10 to 60°C a mixture of (i) 70 to 10% by weight of piperylene concentrate having a boiling point of 30 to 50°C produced from the cracking of petroleum oil in a gasoline manufacturing process and having a 2-methyl-2-butene content of less than 15% by weight and a dicyclopentadiene content of less than 5%, (ii) 30 to 90% by weight of vinyl aromatic monomer, (iii) 30 to 70% by weight of an inert diluent, and (iv) a sufficient amount of $BF_3$ to catalyze the reaction, and removing the diluent and catalyst from the reaction mixture.

Also according to the invention, the tackifier resins are used in adhesive compositions comprising elastomer block copolymers, amorphous polyolefins, or ethylene-vinyl acetate copolymers.

The tackifying resin of this invention has a molecular weight distribution Mw/Mn of 1 to 5 with the preferred range being 1.5 to 4.5 and the most preferred range being 2.0 to 4. The glass transition temperature is -10 to 70°C with the preferred range being 20 to 60°C. These resins exhibit a good solubility in a wide variety of polymeric materials used in adhesive compositions.

In the practice of this invention, the tackifying resin can be used in hot melt adhesive and non-woven adhesive compositions. The adhesive compositions comprise block copolymers such as styrene-isoprene-styrene (SIS), styrenebutadiene-styrene (SBS), multiblock $(SB)_n$ where n is 100 to 1,000, or amorphous polyolefins and ethylene-vinyl acetate (EVA), plus the tackifier. The tackifier offers excellent tack, high shear strength, and unique solubility. The new resins are excellent tackifiers in STEREON 840A as well as in SBS (KRATON 1102) and SIS (KRATON 1107) systems, since they exhibit good compatibility with the butadiene and isoprene domains of the block copolymers. The tackifiers are suitable for use in SBS, $(SB)_n$ and SIS systems for disposable products, and for pressure sensitive adhesive tapes. In addition, they can be used in hot melt EVA systems with a vinyl acetate content of 20 to 40%, e.g., in hot melt packaging adhesives, because the tackifiers offer light color, heat stability and an excellent balance in cohesive and adhesive strengths.

Various aliphatic and aromatic hydrocarbon diluents can be used to prepare the tackifying resin of this invention. Representative examples of such aromatic hydrocarbons are toluene and benzene; and representative examples of aliphatic hydrocarbons are pentane, hexane, heptane and octane. A particularly suitable hydrocarbon solvent is a mixture containing from 10 to 90 parts of toluene and from 90 to 10 parts of hexane.

The feed material used to produce the tackifier resin of the present invention is a hydrocarbon feed material having five carbons atoms. The preferred hydrocarbon feed material is a piperylene concentrate that is a mixture of an organic fraction produced from the cracking of petroleum oil in a gasoline manufacturing process. The primary constituents of this feed stream are the cis and trans isomers of piperylene. In addition to the piperylene, $C_5$ monomers such as methylbutenes and pentenes (both linear and cyclic) are present. This feed preferably has less than 15% of 2-methyl-2-butene. The remainder of the resin feed is composed of heavier and lighter reactives and unreactives such as dicyclopentadiene (less than 5%), cyclopentene, isoprene, and pentanes. The most preferred piperylene concentrate is a commercial concentrate that is a mixed monomer stream of 55 weight percent pentadienes-1,3 (total cis and trans isomers), 10 weight percent of 2-methyl-butene, 14 weight percent of cyclopentene, 4 weight percent of pentene-2 (total cis and trans isomers), 10 weight percent alkanes (total pentane, cyclopentane, and neohexane), and 7 weight percent of aliphatic olefins and diolefins. This commercial piperylene concentrate has the properties required for the instant invention. The piperylene concentrate should be 70 to 10 percent by weight of the reaction mixture.

Any vinyl aromatic monomer can be used to synthesize the tackifying resin of this invention. However, the vinyl aromatic monomers preferably will be styrene, alpha-methylstyrene (AMS), para-methylstyrene (PMS), vinyltoluene, and t-butylstyrene. The most preferred is AMS. The feed stream for preparing the tackifier resin preferably has 30 to 90% by weight, and most preferably 30 to 70%, of the vinyl aromatic component.

Boron trifluoride gas or the complexes of boron trifluoride with, for example, water, alcohols, ethers and phenols can be used for the polymerization catalyst for this invention. Complexes of inorganic acids with $BF_3$, such as phosphoric acid/$BF_3$, can also be used.

The polymerization temperature for preparing the tackifier resin of this invention is -10 to 60°C, preferably 0 to 10°C. The molecular weight of the tackifier resin and its solubility in polymeric material changes depending upon the polymerization temperature. In general, when the polymerization temperature of the resin is increased, the resin's molecular weight is decreased and its solubility favors polar polymers.

In the practice of this invention, adhesive compositions can be prepared by mixing the tackifying resin with an elastomeric block copolymer (such as styrene-butadienestyrene (SBS) or styrene-isoprene-styrene (SIS) terpolymers) and oil using volatile organic hydrocarbon solvents or by melt mixing at 300 to 350°F (149 to 177°C). The adhesive mixture of the tackifying resin, elastomeric block copolymer, and oil can be used for bonding substrate surfaces by applying the adhesive by hot melt or spraying equipment.

EXAMPLES

All percentages and/or parts are by weight unless otherwise noted.

The following tests were performed on the resin prepared in the Examples:

The static time-to-failure bond test was described in U.S. Patent 4,526,577. Adhesive (held at 325°F (163°C)) was applied to a series of polyethylene surfaces 1/2 inch (1.27 cm) in width and 1 1/2 inches (3.81 cm) long and hand compressed onto similar size sheets of Kraft paper. The bonds were hung vertically with 50 gram weights and maintained at 105°F (40.6°C). The time to failure was noted.

This test is an indication of the heat resistance of the adhesive under temperature conditions approximating those encountered during use (wear) of the disposable construction. Long failure times are desirable and indicate strong bonds, which are particularly essential in certain areas of the disposable constructions that are subjected to greater stress during use.

Two procedures are used for determining the molten Gardner color of tested samples. The Molten Gardner Color of unaged samples is determined as follows: (1) 20 gram samples are weighed into a 30 ml glass beaker. The beaker is covered with aluminum foil and heated in a 120°C oven until the sample in the beaker becomes molten (about 5 to 15 minutes). The molten sample is then poured into a Gardner viscosity tube and the tube is placed into a Gardner Color Comparator for determining the color. The color that closely matches the ones on the Comparator is read off the scale on the Comparator. (2) The Molten Gardner Color of aged at 177°C samples was determined as follows: The procedure is the same as described in (1) above except that the sample is not covered with aluminum foil when it is placed in the oven.

The dichromate color test is a method for determining the color of water white resins, specifically those resins having Gardner colors less than one. A 25% solution of the sample in toluene is compared spectrophotometrically with potassium dichromate color standards. The method uses a UV-visible spectrophotometer. The absorbance is measured at the maximum absorption peak of $K_2Cr_2O_7$ at 349.5 nm using 1.0 cm cells.

The resin samples are dissolved in reagent grade toluene and the absorption read at 349.5 nm. The equivalent $K_2Cr_2O_7$ value is in parts per million (ppm) and is read from a calibration plot. It has been estimated that a Gardner color of 1 is approximately equivalent to a reading of 50 ppm of $K_2Cr_2O_7$ using this method.

The terms used in the examples are defined as follows:

Solvents: (A) HiSol-10, a commercial aromatic solvent marketed by Ashland Chemical Co. Major components are the various ethyltoluenes and other substituted toluenes; (B) dried xylene; (C) dried recycled toluene of fractionated primarily aromatic solvent, obtained by taking the middle distillation cut from a polymerization of $C_5$ hydrocarbons in a toluene diluent; (D) dried recycled hydrogenation solvent is an aliphatic/cycloaliphatic solvent recycled from a hydrogenation process of hydrocarbon resins.

OMSCP means odorless mineral spirits cloud point, which is determined by the following procedure: A 10 weight percent resin is mixed in a test tube with odorless mineral spirits. The test tube is then heated until a clear solution is formed. The solution is cooled until turbidity is obtained. The onset of initial turbidity is recorded as the initial cloud point. Cooling of the test tube is continued until visibility is totally obstructed. The final cloud point is recorded at the point of no visibility.

MMAP means mixed methylcyclohexane aniline cloud point, which is determined using a modified ASTM D 611 procedure. Methylcyclohexane is substituted for the heptane used in the ASTM D 611 test procedure. The procedure uses resin/aniline/methylcyclohexane in a ratio of 1/2/1 (weight/volume/volume) and the cloud point is determined by cooling a previously heated, clear blend of the three components until complete turbidity just occurs.

R & B Soft. Pt. means the Ring and Ball Softening Point according to ASTM E28-67.

Mw means weight average molecular weight.

Mn means number average molecular weight.

Mz means the higher moment of the higher molecular weight distribution based on the mathematical definition:

$$\frac{\sum n_i m_i^3}{\sum n_i m_i^2}$$

where $n_i$ is the number of molecules of molecular weight $M_i$. All molecular weights were measured by Size Exclusion Chromatography.

Pd means the polydispersity of the molecular weight of the resin, defined as Mw/Mn.

EXAMPLES 1 to 19

The reagents, Lyondell piperylene concentrate (LPC), alpha-methylstyrene (AMS), and a solvent such as HiSol-10, were passed through a chromatography column (2 cm x 50 cm) filled with activated alumina, at a rate of 10 to 20 ml per minute to remove dissolved and/or entrained moisture.

The amounts of reagents as shown in Table I, infra, were then weighed out and placed into a one liter round bottom reaction flask equipped with a mechanical TEFLON stirrer, a gas feed tube, a nitrogen gas inlet tube, and a thermometer. Table I sets forth the percentages of the ingredients in the reaction mass, conditions, and results; for the sake of demonstrating the procedure, the amounts of the ingredients for Example 1 were 300 grams of HiSol-10, 180 grams of LPC, and 120 grams of AMS. A nitrogen gas line was connected to the flask and nitrogen was bubbled through the reactants in the flask at a very slow rate while the flask was being cooled to the reaction temperature of $0\,°C$ by using an external cooling bath of isopropanol and dry ice. $BF_3$ gas was then passed through the gas feed tube line into the flask below the liquid level at approximately 0.079 grams per minute while stirring the reactants in the flask. The $BF_3$ was fed stepwise into the flask in discrete amounts of from 0.1 gram per minute to 0.4 gram per minute until a strong exotherm was observed which was kept under control by the external cooling bath.

Once the reaction was completed, the reaction mixture was neutralized with lime, ammonium hydroxide, or soda ash. The neutralized organic reaction mixture was separated from the neutralization products, and the organic phase was vacuum or steam distilled to remove the solvent and low molecular weight oils. The resin was analyzed and the results are set forth in Table I. The new $C_5$ resin also had a light initial color (Gardner no. less than -1) and excellent color and viscosity stability upon heat aging compared to similar commercial resins as shown in Table II. Specifically, the $C_5$ resin prepared from $BF_3$ catalyst has much better color stability than a similar resin prepared with an $AlCl_3$ catalyst.

5

EP 0 455 105 B1

## TABLE I

| Example No. | Solvent | Wt% LPC | Wt% AMS | Reaction Temp °C | OMSCP (init.)°C | OMSCP (full)°C | MMAP | R & B Soft Pt.°C | % Yield | Molecular Weight Mw | Mn | Mz | Pd | Gardner Color |
|---|---|---|---|---|---|---|---|---|---|---|---|---|---|---|
| 1 | A | 60 | 40 | 10 | 30 | 23 | 48 | 74 | 80.1 | 2753 | 806 | 7426 | 3.41 | ‹G-1 |
| 2 | A | 20 | 80 | 10 | >180 | 157 | 11 | 120 | 86.8 | 2816 | 811 | 7249 | 3.47 | ‹G-1 |
| 3*** | A | 60 | 40 | 25 | -10 | -36 | 43 | 64 | 77.6 | 1798 | 697 | 4862 | 2.58 | --- |
| 4*** | B | 60 | 40 | 25 | -23 | -27 | 43 | 71 | 74.4 | 2018 | 961 | 4677 | 2.10 | --- |
| 5*** | C | 60 | 40 | 25 | -23 | -26 | 42 | 69 | 73.9 | 1930 | 829 | 5140 | 2.33 | --- |
| 6 | D | 60 | 40 | 25 | 9 | -2 | 42 | 72 | 66.8 | 2110 | 820 | 6776 | 2.57 | ‹G-1 |
| 7 | A | 60 | 40 | 0 | 105 | 94 | 49 | 83 | 73.1 | 3931 | 900 | 12048 | 4.37 | ‹G-1 |
| 8 | A | 60 | 40 | 50 | -25 | -50 | 27 | 54 | 62.3 | 875 | 621 | 1473 | 1.41 | ‹G-1 |

*** Although the Gardner Color was not measured for these samples, the samples were water white in color based on a visual inspection.

TABLE I (Continued)

| Example No. | Solvent | Wt% LPC | Wt% AMS | Reaction Temp °C | OMSCP (init.)°C | OMSCP (full)°C | MMAP | R & B Soft Pt.°C | % Yield | Molecular Weight Mw | Mn | Mz | Pd | Gardner Color |
|---|---|---|---|---|---|---|---|---|---|---|---|---|---|---|
| 9 | C | 55 | 45 | 5 | 48 | 39 | 49 | 90 | --- | 2785 | 752 | 8061 | 3.70 | ‹G-1 |
| 10 | A | 40 | 60 | 25 | 37 | 31 | 23.5 | 90 | 80 | 1729 | 735 | 4272 | 2.35 | ‹G-1 |
| 11 | A | 58 | 42 | 10 | 70 | 62 | 44 | 77.5 | 77 | 2964 | 791 | 9074 | 3.75 | ‹G-1 |
| 12 | A | 57 | 43 | 5 | 70 | 61 | 47 | 83 | 79 | 3202 | 927 | 8729 | 3.45 | ‹G-1 |
| 13 | A | 50 | 50 | 5 | 90 | 83 | 41 | 95 | 81 | 3210 | 954 | 8514 | 3.36 | ‹G-1 |
| 14 | A | 40* | 50* | 10 | 74 | 66 | 37 | 87 | 79 | 1805 | 659 | 5567 | 2.74 | ‹G-1 |

* Resin also contained 10% by weight of isobutylene.

EP 0 455 105 B1

TABLE I (Continued)

| Example No. | Solvent | Wt% LPC | Wt% AMS | Reaction Temp °C | OMSCP (init.)°C | OMSCP (full)°C | MMAP | R & B Soft Pt.°C | % Yield | Molecular Weight | | | Pd | Gardner Color |
|---|---|---|---|---|---|---|---|---|---|---|---|---|---|---|
| | | | | | | | | | | Mw | Mn | Mz | | |
| 15 | A | 60 | 40 Styrene | 10 | -27 | -70 | 31 | 48 | 75.4 | 1421 | 687 | 3427 | 2.07 | <G-1 |
| 16 | A | 60 | 20 AMS/ 20 p-methyl- styrene | 10 | -20 | -32 | 50 | 71 | 80.3 | 2883 | 967 | 7313 | 2.98 | · |
| 17 | A | 10 | 90 | 10 | >180 | 166 | 9 | 119 | 86.1 | 2376 | 609 | 6832 | 3.88 | <G-1 |
| 18** | A | 60 | 40 | 10 | 25 | 12 | 45 | 72 | 80 | 2420 | 906 | 6309 | 2.67 | --- |
| 19 | A | 60 | 40 | 10 | 48 | 38 | 48 | 78 | 79.2 | 3093 | 958 | 8432 | 3.23 | <G-1 |
| Comp-1 | A | 100 | 0 | 10 | -68 | <-70 | 82.5 | -- | 58.7 | 1226 | 564 | 3397 | 2.17 | --- |
| Comp-2 | A | 100 | 0 | -30 | -72 | <-72 | 90 | 26 | 62.3 | 2186 | 848 | 6467 | 2.58 | --- |

---

** Monomers were not dried.

## TABLE II

### RESIN AGING COLOR STABILITY*

| Resin | Initial | 8 hours | 24 hours | 48 hours |
|---|---|---|---|---|
| $C_5$/AMS (example 9) | < -1 | 2 | +6 | 12 |
| RES-D 2083** | 3 | 7 | 11 | 13 |
| PICCOTAC HM 2162*** | 4 | 6 | 12 | 16 |
| ECR 149B**** | -1 | 6 | 12 | 16 |

---

\* Aged at 177°C in an air convected oven
\*\* RES-D 2083 is a styrenated terpene resin from Hercules Incorporated.
\*\*\* PICCOTAC HM 2162 is a styrenic-modified $C_5$ resin using $AlCl_3$ catalyst.
\*\*\*\* ECR 149B is a partially hydrogenated $C_9$ resin from Exxon Corporation.

EXAMPLE 20

A mixture of 60% of LPC and 40% of AMS were semi-continuously polymerized at 25°C in recycled toluene using $BF_3$ catalyst.

Following the procedure for drying the reagents as outlined in Example 1, sufficient material was dried to make up a 1000 to 2000 gram preblend of the indicated ratios at 50 percent monomer by weight. Approximately 100 grams of recycled toluene were charged into a 500 ml bottom drain round bottom flask equipped with a thermometer well, TEFLON stirrer with bearing, cold finger condenser, and a feed funnel. $BF_3$ was fed into the flask at a rate of 0.021 grams per minute until an exotherm occurred.

The exotherm was controlled by use of an external cooling bath. $BF_3$ was fed into the flask until an excess was observed coming out of the cold finger condenser (this was facilitated by a nitrogen purge on the addition funnel). Once this excess was observed, 200 grams of preblend were continuously fed into the flask over a 30 minute period while $BF_3$ gas was being added to the reaction vessel. After the addition of all of the preblend, the reaction temperature was maintained for a period of 30 minutes while stirring. 200 grams of the reacted solution were drained from the flask and were neutralized by the addition of about 50 grams of lime. The addition funnel was filled with 200 grams of the same feedblend and the procedure was repeated for four or more 200 gram quantities. Each time the polymerization was reinitiated by the addition of new feedblend, a residual amount of the previous polymerization reaction product was left in the bottom of the reaction flask (100 grams).

The properties of the resins produced continued to change until the fourth or fifth 200 gram quantities. The resin produced after the 4th reactor volume was essentially identical to resin produced in the 4th reactor volume. The properties of the resins produced from this reaction are listed in Table III.

## TABLE III

| Experiment | 1 | 2 | 3 | 4 |
|---|---|---|---|---|
| R & B Soft. Pt. (°C) | 70 | 68 | 68 | 68 |
| MMAP (°C) | 43.5 | 42.0 | 42.0 | 42.0 |
| OMSCP (initial/full °C) | -8/<-70 | -5/<-70 | -30/<-70 | -30/<-70 |
| % Yield | 79.2 | 80.7 | 78.4 | 77.7 |
| Dichromate Color (ppm) | 21.5 | 21.0 | 26.5 | 26.5 |
| Mw(UV) | 1913 | 1750 | 1723 | 1673 |
| Mn(UV) | 709 | 757 | 778 | 756 |
| Mz(UV) | 5158 | 4397 | 4182 | 3913 |
| Pd(UV) | 2.70 | 2.31 | 2.21 | 2.21 |

Example 21

A mixture of 40% of LPC and 60% of AMS were continuously polymerized at 10°C in recycled toluene using BF$_3$ catalyst.

Two 500 ml reaction flasks equipped with overflows were connected in series. The reaction flasks were equipped with TEFLON stirrers with bearings, thermometers, BF$_3$ feed tube on the reactor, monomer feed (below liquid level) on the reactor, and nitrogen sparge. A metering pump was used to pump a preblend of 600 grams of recycled toluene, 560 grams of LPC, and 840 grams of AMS that had been dried through activated alumina as described in Example 1. Approximately 100 grams of this preblend were added to the reactor. The monomer was then polymerized by the addition of BF$_3$ at the rate of 0.021 gram per minute while stirring and maintaining the reaction temperature through the use of an external cooling bath. Once the initial reaction was completed, the preblend and BF$_3$ were continuously fed into the reactor. The preblend was fed into the reactor at a rate of 10 to 12 ml per minute using the metering pump. Once the first reactor in the series was full, it overflowed by gravity into the second reactor where reaction was continued as the second reactor filled. The effluent from the second overflow flask was collected into a beaker and neutralized with either NH$_4$OH or lime. The physical properties of the resins produced reached steady state after 3 to 4 reactor volumes.

The physical properties of the resins produced are tabulated in Table IV.

## TABLE IV

| Reactor Volume No. | 1 | 2 | 3 | 4 | 5 |
|---|---|---|---|---|---|
| R & B Soft Pt. (°C) | 90.0 | 88.0 | 86.0 | 86.0 | 83.0 |
| MMAP (°C) | 25.0 | 26.0 | 25.0 | 25.0 | 24.0 |
| OMSCP (initial/ full °C) | >180 | >180/145 | 160/100 | 155/37 | 90/10 |
| % Yield | 75.8 | 70.9 | 67.7 | 77.4 | |
| Mw(UV) | 2102 | 1962 | 1693 | 1730 | 1634 |
| Mn(UV) | 471 | 690 | 696 | 687 | 696 |
| Mz(UV) | 13198 | 6761 | 4434 | 4399 | 4058 |
| Pd(UV) | 4.46 | 2.84 | 2.43 | 2.52 | 2.35 |

Example 22

A resin of 60% LPC and 40% AMS was partially fractionated using odorless mineral spirits (a $C_7$ and higher aliphatic diluent) as the fractionating medium. About 2 grams of the resin were dissolved in the odorless mineral spirits in a test tube by heating with a bunsen burner. After the resin was dissolved, the test tube was allowed to cool at room temperature. A precipitate formed at the bottom of the test tube. Gel permeation chromatography and infrared spectroscopy analyses were run on the initial resin and the precipitate to determine the molecular weight and composition. The results are reported in Table V.

## TABLE V

|  | Base Resin | Fractionated |
|---|---|---|
| Dichromate Color (ppm) | 16 | |
| Specific Gravity (g/cc) | 0.983 | |
| Glass Temperature (°C) | 24.5 | |
| Bromine No. (mg/g) | 2.5 | |
| Acid No. | 0.30 | |
| UV alpha (1/gm) | 1.395 | |
| Saponification No. | 0.60 | |
| Flash Point | 505°F (263°C) | |
| Fire Point | 565°F (296°C) | |
| Solut. Visc. 70% in Tol. | 8.3 | |
| Ring & Ball Soft. Pt. (°C) | 79.0 | |
| MMAP (°C) | 49.0 | |
| OMSCP (initial/full °C) | 70/60 | |
| Mw(UV) | 3197 | 11131 |
| Mn(UV) | 881 | 2783 |
| Mz(UV) | 9197 | 17989 |
| Pd(UV) | 3.63 | 4.00 |
| % AMS (Infrared Analysis) | 38 | 89 |

These data indicate that the $C_5$/AMS that was prepared in this Example has a high molecular weight tail with more aromatic solubility. This high molecular weight aromatic soluble resin will improve the shear properties of the adhesives based on styrenic block copolymer as shown in Tables VI and VII.

Example 23

The experimental 55% $C_5$/45% AMS resin made as described in Example 9 was formulated with SIS block copolymer marketed under the name KRATON 1107 by Shell Co. to evaluate its performance in hot melt pressure sensitive adhesives (see Table VI). The control samples are ECR-149B (from Exxon) and RES D-2083 (styrenated limonene resin marketed by Hercules Incorporated). This $C_5$/AMS resin has excellent pressure sensitive properties to polyethylene and steel substrates similar to the control samples.

TABLE VI

| Adhesive Resin Composition | 1 (parts) | 2 (parts) | 3 (parts) | 4 (parts) |
|---|---|---|---|---|
| $C_5$/AMS (Example 9) | 50 | -- | -- | 50 |
| ECR-149B | -- | 50 | -- | -- |
| RES D-2083 | -- | -- | 50 | -- |
| KRISTALEX 5140 | -- | -- | -- | 10 |
| KRATON 1107 | 50 | 50 | 50 | 50 |
| Mineral Oil | 10 | 10 | 10 | 10 |
| PSA Properties* | | | | |
| ------------ | | | | |
| 180°C Peel (g/cm) | 957±36 | 1199±130 | 945±24 | 945±176 |
| Quick Stick (g/cm) | 727±12 | 630±24 | 630±2 | 570±218 |
| Loop Tack to SS (g/cm) | 1138±109 | 1223±48 | 1138±36 | 360±24 |
| Loop Tack to PE (g/cm) | 460±48 | 436±84 | 339±120 | 73±36 |
| SAFT (°C) | 72±2 | 69±2 | 72±1 | 76±1 |
| Melt Viscosity @ 350°F (177°C) (cp) | 40,700 | 38,500 | 43,700 | 38,400 |

* Pressure Sensitive Tape Council (PSTC) Method

The $C_5$/AMS resin in the example can also be compounded with KRATON 1112. The composition has a low melt viscosity for sprayable hot melt applications in the non-wovens industry.

## TABLE VII

| | Formulation 1 | Formulation 2 | Formulation 3 | Formulation 4 | Formulation 5 | Formulation 6 | Formulation 7 |
|---|---|---|---|---|---|---|---|
| Resin Example 10 | 63 | --- | --- | --- | --- | --- | --- |
| Resin Example 11 | --- | --- | 63 | --- | --- | --- | --- |
| Resin Example 12 | --- | 63 | --- | --- | --- | --- | --- |
| RES D-2083 | --- | --- | --- | 63 | --- | --- | --- |
| RES D-2137a | --- | --- | --- | --- | 63 | --- | --- |
| ARKON M-90 | --- | --- | --- | --- | --- | 60 | --- |
| ECR-149B | --- | --- | --- | --- | --- | --- | 63 |
| STEREON 840A | 20 | 20 | 20 | 20 | 20 | 20 | 20 |
| Mineral Oil | 17 | 17 | 17 | 17 | 17 | 20 | 17 |
| Tg (C°)* | 30°C | 25°C | 23°C | 20°C | 18°C | 13°C | 26°C |
| G' at 25°C* (dyne/cm²) | $4.5 \times 10^6$ | $1.5 \times 10^6$ | $7.0 \times 10^5$ | $5.4 \times 10^5$ | $4.3 \times 10^5$ | $2.8 \times 10^5$ | $1.9 \times 10^6$ |
| G' at 37°C (dyne/cm²) | $5.2 \times 10^5$ | $3.5 \times 10^5$ | $1.9 \times 10^5$ | $2.1 \times 10^5$ | $1.8 \times 10^5$ | $1.6 \times 10^5$ | $3.1 \times 10^5$ |
| Static Peel | 0.2 hr | 19.4 hrs | 16 hrs | 11.6hrs | 4.4 hrs | 2.9 hrs | 5.9 hrs |
| Failure Mode | Cohesive | Cohesive | Cohesive | Cohesive | Cohesive | Adhesive | Adhesive |
| Tack (to PE) | Poor tack | Excellent | Excellent | Excellent | Excellent | Excellent | Excellent |

\* Dynamic mechanical properties measured by RMS

(a) RES D 2137 is a $C_5$ resin polymerized with $AlCl_3$ (Hercules Incorporated).

## Example 24

The experimental $C_5$/AMS resins (Examples 12, 11, and 10) were formulated with STEREON 840A (SB) from Firestone, Inc. to prepare pressure sensitive adhesives for non-woven applications. The formulations are shown in Table VII. This table also includes styrenated terpene resin (RES D-2083 from Hercules), styrene-modified $C_5$ resin (RES D-2137 from Hercules), and hydrogenated $C_9$ resin (ARKON M-90 from Arakawa, Japan). The adhesives using $C_5$/AMS resins have higher shear strength (static peel) than the control samples because the $C_5$/AMS resins contain higher molecular weight aromatic fractions as shown in Table V. The adhesives can be sprayed easily using Nordson hot melt equipment.

Example 25

The experimental $C_5$/AMS resin (Example 9) was formulated with SBS block copolymer (KRATON 1102 from Shell Co.) to evaluate its PSA property for non-woven, label, and tape applications. The resin's performance was compared with the PSA property of the resin containing styrene-modified terpene (Res-D 2083) in Table VIII.

Example 26

The experimental resins (Examples 14 & 10) and styrene-modified terpene resin (RES D-2083) were compounded with EVA (28% VA ELVAX 240 from Du Pont) and wax (CHEVRON 159) at 160°C using melt processing. The hot melt adhesive performance data of the resins are set forth in Table IX. The EVA hot melts containing $C_5$/AMS resins performed similarly in compatibility and mechanical properties to the hot melt with styrenated terpene resin. Consequently, the hot melt adhesive made with the $C_5$/AMS resin of this invention can be used for various applications such as in bookbinding, box closing, and carton sealing.

## TABLE VIII

| Adhesive Resin Composition | 1 | 2 | 3 | 4 | 5 | 6 |
|---|---|---|---|---|---|---|
| $C_5$/AMS (Example 9) | 44 | -- | 46 | -- | 48 | -- |
| RES-D 2083 | -- | 44 | -- | 46 | -- | 48 |
| KRATON 1102 | 32 | 32 | 31 | 31 | 30 | 30 |
| Oil (KAYDOL) | 24 | 24 | 23 | 23 | 22 | 22 |
| Quick Stick (g/cm), SS | 290 | 180 | 327 | 182 | 327 | 266 |
| Quick Stick (g/cm), PE | -- | -- | 145 | 73 | -- | -- |
| 180° peel (g/cm), SS | 521 | 279 | 654 | 327 | 654 | 424 |
| 180° peel (g/cm), PE | -- | -- | 194 | 157 | -- | -- |

## Table IX

| | 1 | 2 | 3 |
|---|---|---|---|
| Example 14 | -- | 33.3 | -- |
| Example 10 | 33.3 | ---- | ---- |
| RES D-2083 | ---- | ---- | 33.3 |
| EVA 240* | 33.3 | 33.3 | 33.3 |
| CHEVRON Wax | 33.3 | 33.3 | 33.3 |
| Cloud Point (°C) | 113 | 84 | 75 |
| Tensile ($kg/cm^2$) | 31 | 32.5 | 25.7 |
| Elongation (%) | 76 | 87 | 77 |
| Modulus ($kg/cm^2$) | 710 | 669 | 591 |
| Viscosity (200°F) (93.3°C) | 16,250 cps (16,25 Pa.s) | 26,000 cps (26 Pa.s) | 20,650 cps (20.65 Pa.s) |
| Gardner Color | | | |
|   -Initial | -1 | -1 | +2 |
|   -24 hrs aging at 177°C. | 2 | -3 | -6 |

*Marketed as EVAX 240 by the Du Pont Company.

## Claims

1. A tackifier resin prepared from piperylene and an aromatic hydrocarbon, characterized in that it is water white in color, has a Gardner number of less than one with excellent color stability under heat, a softening point of 60 to 120°C, a weight average molecular weight (Mw) of 2,000 to 8,000, a Z average molecular weight (Mz) of 5,000 to 12,000, and a molecular weight distribution (Mw/Mn) of 1 to 5, and is prepared from a monomer mixture consisting of (a) 70 to 10% by weight of a piperylene concentrate having a boiling point of 30 to 50°C produced from the cracking of a petroleum oil fraction in a gasoline manufacturing process and having a 2-methyl-2-butene content of less than 15% by weight and a dicyclopentadiene content of less than 5% by weight, and (b) 30 to 90% by weight of a vinyl aromatic monomer.

2. The resin composition of claim 1, further characterized in that the vinyl aromatic monomer is alpha-methylstyrene.

3. A method of preparing the resin of claim 1 or 2, characterized by polymerizing at a temperature of -10 to 60°C a mixture of (i) 10 to 70% by weight of a piperylene concentrate having a boiling point of 30 to 50°C produced from the cracking of petroleum oil in a gasoline manufacturing process and having a 2-methyl-2-butene content of less than 15% by weight and a dicyclopentadiene content of less than 5%, (ii) 30 to 90% by weight of a vinyl aromatic monomer, (iii) 30 to 70% by weight of an inert diluent, and (iv) a sufficient amount of $BF_3$ to catalyze the reaction, and removing the diluent and catalyst from the reaction mixture.

4. The method of claim 3, further characterized in that the vinyl aromatic monomer is alpha-methylstyrene.

5. Use of the resin of claims 1 or 2 as a tackifier in an adhesive composition comprising an elastomeric block copolymer or ethylene-vinyl acetate copolymer.

6. Use of the resin of claims 1 or 2 as a tackifier in an adhesive composition comprising an elastomeric block copolymer selected from styrene-butadiene-styrene, multiblock $(SB)_n$ where n is 100-1000, styrene/isoprene/styrene, or styrene/ethylene-butylene/styrene polymers.

**Patentansprüche**

1. Klebrigmacher-Harz, hergestellt aus Piperylen und einem aromatischen Kohlenstoff, gekennzeichnet durch eine wasserklare Farbe, eine Gardner-Zahl von niedriger als 1 mit ausgezeichneter Farbbeständigkeit bei Hitze, einen Erweichungspunkt von 60 bis 120°C, ein gewichtsmittleres Molekulargewicht (Mw) von 2 000 bis 8 000, ein Z-mittleres Molekulargewicht (Mz) von 5 000 bis 12 000 und eine Molekulargewichtsverteilung (Mw/Mn) von 1 bis 5, welches aus einem Monomer-Gemisch hergestellt wird, das aus folgendem besteht: (a) 70 bis 10 Gew.-% eines Piperylen-Konzentrats mit einem Siedepunkt von 30 bis 50°C, das durch Cracken einer Erdölfraktion in einem Benzin-Herstellungsverfahren gebildet wird, und einen 2-Methyl-2-buten-Gehalt von niedriger als 15 Gew.-% und einen Dicyclopentadien-Gehalt von niedriger als 5 Gew.-% aufweist, und (b) 30 bis 90 Gew.-% eines vinylaromatischen Monomers.

2. Harzzusammensetzung nach Anspruch 1, außerdem dadurch **gekennzeichnet**, daß es sich bei dem vinylaromatischen Monomer um α-Methylstyrol handelt.

3. Verfahren zur Herstellung des Harzes nach Anspruch 1 oder 2, dadurch **gekennzeichnet**, daß bei einer Temperatur von -10 bis 60°C ein Gemisch aus (i) 10 bis 70 Gew.-% eines Piperylen-Konzentrats mit einem Siedepunkt von 30 bis 50°C, das beim Cracken von Erdöl in einem Benzin-Herstellungsverfahren gebildet wird, und einen 2-Methyl-2-buten-Gehalt von niedriger als 15 Gew.-% und einen Dicyclopentadien-Gehalt von niedriger als 5 % aufweist, (ii) 30 bis 90 Gew.-% eines vinylaromatischen Monomers, (iii) 30 bis 70 Gew.-% eines inerten Verdünnungsmittels und (iv) einer ausreichenden Menge $BF_3$ zu Katalysierung der Reaktion polymerisiert wird und das Verdünnungsmittel und der Katalysator aus dem Reaktionsgemisch entfernt werden.

4. Verfahren nach Anspruch 3, außerdem dadurch **gekennzeichnet,** daß es sich bei dem vinylaromatischen Monomer um α-Methylstyrol handelt.

**5.** Verwendung des Harzes nach den Ansprüchen 1 oder 2 als Klebrigmacher in einer Klebemittel-Zusammensetzung, die ein elastomeres Block-Copolymer oder Ethylen-Vinylacetat-Copolymer enthält.

**6.** Verwendung des Harzes nach den Ansprüchen 1 oder 2 als Klebrigmacher in einer Klebemittel-Zusammensetzung, die ein elastomeres Block-Copolymer enthält, das aus Styrol-Butadien-Styrol-, Multiblock(SB)$_n$-, wobei n für 100 - 1000 steht, Styrol/Isopren/Styrol- oder Styrol/Ethylen-Butylen/Styrol-Polymeren ausgewählt ist.

**Revendications**

**1.** Résine adhésive préparée à partir de pipérylène et d'un hydrocarbure aromatique, caractérisée en ce qu'elle est est presque incolore et transparente, a un nombre de Gardner inférieur à 1 avec une excellente stabilité de couleur à chaud, un point de ramollissement de 60 à 120°C, un poids moléculaire moyen en poids (Mw) de 2000 à 8000, un poids moléculaire moyen en Z (Mz) de 5000 à 12000, et une distribution de poids moléculaire (Mw/Mn) de 1 à 5, et est préparée à partir d'un mélange de monomères constitué de (a) 70 à 10 % en poids d'un concentré de pipérylène ayant un point d'ébullition de 30 à 50°C fabriqué par craquage d'une fraction de pétrole par un procédé de fabrication d'essence et ayant une teneur en 2-méthyl-2-butène de moins de 15% en poids et une teneur en dicyclopentadiène de moins de 5 % en poids, et (b) 30 à 90 % en poids d'un monomère vinylaromatique.

**2.** Composition de résine selon la revendication 1, caractérisée en ce que le monomère vinylaromatique est l'alpha-méthylstyrène.

**3.** Procédé de préparation de la résine selon la revendication 1 ou 2, caractérisé par le fait de polymériser à une température de -10 à 60°C un mélange de (i) 10 à 70 % en poids d'un concentré de pipérylène ayant un point d'ébullition de 30 à 50°C fabriqué par craquage d'une fraction de pétrole par un procédé de fabrication d'essence et ayant une teneur en 2-méthyl-2-butène de moins de 15% en poids et une teneur en dicyclopentadiène de moins de 5 %, (ii) 30 à 90 % en poids d'un monomère vinylaromatique, (iii) 30 à 70 % en poids d'un diluant inerte, et (iv) une quantité suffisante de BF$_3$ pour catalyser la réaction, et de retirer le diluant et le catalyseur du mélange réactionnel.

**4.** Procédé selon la revendication 3, caractérisé en ce que le monomère vinylaromatique est l'alpha-méthylstyrène.

**5.** Utilisation de la résine des revendications 1 ou 2 comme agent adhésif dans une composition adhésive comprenant un copolmère bloc élastomère ou un copolmère éthylènelacétate de vinyle.

**6.** Utilisation de la résine des revendications 1 ou 2 comme agent adhésif dans une composition adhésive comprenant un copolymère bloc élastomère choisi parmi les polmères styrènebutadiènestyrène, multiblocs (SB)n, n étant compris entre 100 et 1000, styrène/isoprène/styrène, ou styrène/éthylène-butylène/styrène